# EUROPEAN PATENT APPLICATION

(11) **EP 4 693 346 A1**
(43) Date of publication of application: **11.02.2026**
(21) Application number: 24860197.3
(22) Date of filing: 25.07.2024
(51) Int. Cl.: H01C 10/20, H01C 10/50, H01C 1/02, H01M 10/44, H01M 50/204

(54) **RESISTOR UNIT, RESISTOR ASSEMBLY, AND BATTERY PACK**

(30) Priority: 31.08.2023 KR 20230115496; 31.01.2024 KR 20240015026
(71) Applicant: LG Energy Solution, Ltd., Seoul 07335 (KR)
(72) Inventor: LEE, Young Jun, Daejeon 34122 (KR)
(74) Representative: Plasseraud IP
(86) International application number: PCT/KR2024/010869
(87) International publication number: WO 2025/048276

(57) **Abstract**

The present disclosure relates to a resistance unit, a resistance assembly, and a battery pack, and more specifically, to a resistance unit that can be connected and separated, a resistance assembly in which a plurality of the resistance units are connected, and a battery pack in which the resistance assembly is installed.

A resistance unit according to an embodiment of the present disclosure includes a first resistance portion formed to extend in a first direction, a second resistance portion formed to extend in a second direction, a case accommodating the first resistance portion and the second resistance portion, and a terminal portion that is coupled to at least one of one end of the first resistance portion and one end of the second resistance portion and partially protrudes to the outside of the case, wherein an opening is formed in each of the portions of the case facing the other end of the first resistance portion and the other end of the second resistance portion, so that a plurality of the resistance units may be connected and separated in the first direction and the second direction, thereby providing resistance of various specifications without limitation of the space in which the resistor is installed.

## Description

### TECHNICAL FIELD

### CROSS-REFERENCE TO RELATED APPLICATIONS

The present application claims priority to Korean Patent Application No. 10-2023-0115496 filed on August 31, 2023 and Korean Patent Application No. 10-2024-0015026 filed on January 31, 2024 in the Republic of Korea, the disclosures of which are incorporated herein by reference.

### TECHNICAL FIELD

The present disclosure relates to a resistance unit, a resistance assembly, and a battery pack, and more specifically, to a resistance unit that can be connected and separated, a resistance assembly in which a plurality of the resistance units are connected, and a battery pack in which the resistance assembly is installed.

### BACKGROUND ART

A rechargeable battery is a battery that can be charged and discharged, unlike a primary battery that cannot be recharged. A low-capacity rechargeable battery is used in small portable electronic devices such as mobile phones, laptop computers, and camcorders, while a high-capacity battery is widely used as a power source for driving motors in hybrid vehicles.

The rechargeable battery may be used in the form of a battery cell, and the battery cell has a form in which a positive electrode, a separator, and a negative electrode are sequentially stacked within an exterior material, and the inner space of the exterior material is filled with an electrolyte solution. A plurality of battery cells may be electrically connected to form a battery module or a battery pack. A main circuitry for charging and discharging the battery cells is installed in the battery pack, and the main circuitry may include a main relay performing the charging and discharging process.

When the main relay of the main circuit installed in the battery pack is key-on, an in-rush current may be generated due to an instantaneous potential difference between the input terminal and the output terminal. In this case, welding of the main relay may occur, which may degrade the performance of the rechargeable battery, and to prevent this, a pre-charge circuit may be connected to the main circuit. The pre-charge circuit includes a pre-charge resistor, so that even when a high voltage difference between the input terminal and the output terminal occurs instantaneously, the magnitude of the in-rush current is reduced by the high resistance component in the circuit, and the voltage difference between the input terminal and the output terminal is also gradually reduced.

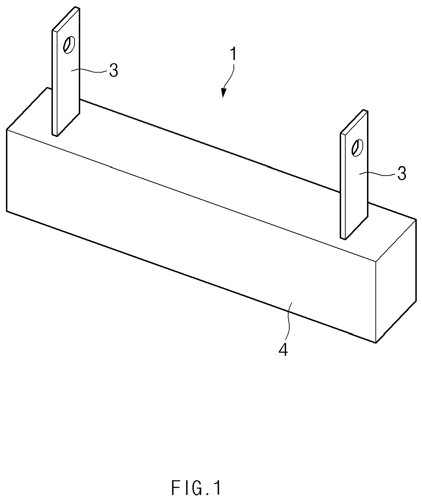

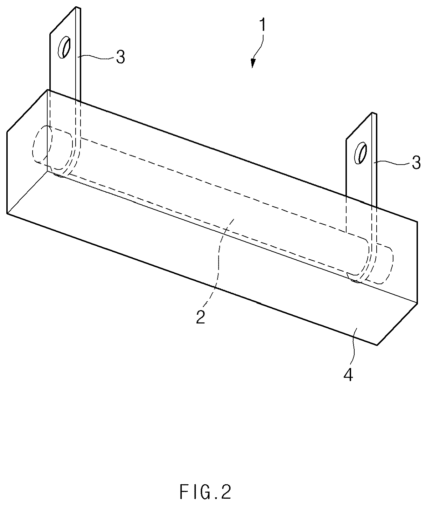

A conventional pre-charge resistor is a single resistance unit, and a conventional resistance unit is shown in FIGS. 1 and 2. Specifically, FIG. 1 is a perspective view schematically showing the overall appearance of a conventional resistance unit, and FIG. 2 is a perspective view showing the internal structure of a conventional resistance unit. As shown in FIGS. 1 and 2, the conventional resistance unit 1 may include a metal rod portion 2 elongated in one direction, a metal terminal portion 3 connected to one end and the other end of the metal rod portion 2, and an exterior material 4 surrounding the metal rod portion 2 and a portion of the metal terminal portion 3. The resistance unit 1 may function as a pre-charge resistor by the metal terminal portion 3 that is directly connected to the pre-charge circuit.

Meanwhile, only one metal rod portion 2 is provided inside the exterior material 4, and a connection portion to which another resistor may be connected is not formed in the metal rod portion 2, so that the conventional resistance units 1 cannot be connected to each other. Therefore, in the prior art, after preparing the resistance units 1 according to the specifications of the resistance required in the pre-charge circuit, each of the resistance units 1 had to be directly connected to the circuit, and thus in cases where the installation space was limited, there was a problem of being unable to provide resistance meeting the required specifications.

### SUMMARY

### TECHNICAL PROBLEM

The present disclosure is designed to solve the problems of the related art, and therefore the present disclosure is directed to providing a resistance unit that can be connected and separated in various directions to overcome the limitation of installation space and provide resistance of various specifications, a resistance assembly in which a plurality of the resistance units are connected, and a battery pack in which the resistance assembly is installed.

### TECHNICAL SOLUTION

A resistance unit according to Embodiment 1 of the present disclosure includes a first resistance portion formed to extend in a first direction; a second resistance portion formed to extend in a second direction; a case accommodating the first resistance portion and the second resistance portion; and a terminal portion that is coupled to at least one of one end of the first resistance portion and one end of the second resistance portion and partially protrudes to the outside of the case, wherein an opening is formed in each of the portions of the case facing the other end of the first resistance portion and the other end of the second resistance portion.

The terminal portion may include a terminal body coupled to at least one of one end of the first resistance portion and one end of the second resistance portion; and a terminal tip extending from the terminal body and partially protruding to the outside of the case.

The shape of the opening may correspond to the shape of the terminal tip.

A terminal coupling groove corresponding to the end shape of the terminal tip may be formed at each of the other end of the first resistance portion and the other end of the second resistance portion.

The length of the first resistance portion in the first direction may be longer than the length of the second resistance portion in the second direction.

The case may have an empty hexahedral shape.

The first direction and the second direction may be perpendicular to each other.

Meanwhile, a resistance unit according to Embodiment 2 of the present disclosure may include a first resistance portion formed to extend in a first direction; a second resistance portion formed to extend in a second direction; a case accommodating the first resistance portion and the second resistance portion; and a terminal portion that is coupled to one end of the first resistance portion and partially protrudes to the outside of the case, wherein an opening may be formed in the portion of the case facing one end of the second resistance portion.

The terminal portion may include a terminal body coupled to one end of the first resistance portion; and a terminal tip extending from the terminal body and partially protruding to the outside of the case.

The shape of the opening may correspond to the shape of the terminal tip.

A terminal coupling groove corresponding to the end shape of the terminal tip may be formed at one end of the second resistance portion.

Meanwhile, a resistance unit according to Embodiment 3 of the present disclosure may include a first resistance portion formed to extend in a first direction; a second resistance portion formed to extend in a second direction; a case accommodating the first resistance portion and the second resistance portion; and a terminal portion that is coupled to both ends of the first resistance portion and partially protrudes to the outside of the case, wherein an opening may be formed in at least one of the portions of the case facing both ends of the second resistance portion.

The terminal portion may include a terminal body coupled to each of both ends of the first resistance portion; and a terminal tip extending from the terminal body and partially protruding to the outside of the case.

The shape of the opening may correspond to the shape of the terminal tip.

A terminal coupling groove corresponding to the end shape of the terminal tip may be formed at one or more of one end and the other end of the second resistance portion.

Meanwhile, a plurality of the resistance units may be coupled in a resistance assembly according to the present disclosure.

The resistance assembly may include an insulating cover that surrounds a portion of the terminal portion protruding to the outside of the case.

Meanwhile, a battery pack according to the present disclosure includes a plurality of battery modules; a main circuitry configuring a charging and discharging path of the plurality of battery modules; a pre-charge circuitry connected to the main circuitry; and a resistance assembly installed in the pre-charge circuitry.

### ADVANTAGEOUS EFFECTS

A resistance unit according to an embodiment of the present disclosure includes a first resistance portion formed to extend in a first direction, a second resistance portion formed to extend in a second direction, a case accommodating the first resistance portion and the second resistance portion, and a terminal portion that is coupled to at least one of one end of the first resistance portion and one end of the second resistance portion and partially protrudes to the outside of the case, wherein an opening is formed in each of the portions of the case facing the other end of the first resistance portion and the other end of the second resistance portion, so that a plurality of the resistance units may be connected and separated in the first direction and the second direction, thereby having an advantageous effect of providing resistance of various specifications without limitation of the space in which the resistor is installed.

### BRIEF DESCRIPTION OF THE DRAWINGS

FIG. 1 is a perspective view schematically showing the overall appearance of a conventional resistance unit.
FIG. 2 is a perspective view showing the internal structure of a conventional resistance unit.
FIG. 3 is a perspective view showing a state in which terminal portions are formed in both a first direction and a second direction in a resistance unit according to Embodiment 1 of the present disclosure.
FIG. 4 is a cross-sectional view showing the internal structure of the resistance unit according to FIG. 3.
FIG. 5 is a cross-sectional view showing a state in which a terminal portion is formed only in a first direction in a resistance unit according to Embodiment 1 of the present disclosure.
FIG. 6 is a cross-sectional view showing a state in which a terminal portion is formed only in a second direction in a resistance unit according to Embodiment 1 of the present disclosure.
FIG. 7 is a cross-sectional view showing the internal structure of a resistance unit according to Embodiment 2 of the present disclosure.
FIG. 8 is a cross-sectional view showing a state in which a groove is formed only at one end of a second resistance portion in a resistance unit according to Embodiment 3 of the present disclosure.
FIG. 9 is a cross-sectional view showing a state in which grooves are formed at both ends of a second resistance portion in a resistance unit according to Embodiment 3 of the present disclosure.
FIG. 10 is a perspective view showing a state in which resistance units are connected in a first direction in a resistance assembly according to the present disclosure.
FIG. 11 is a perspective view showing a state in which resistance units are connected in a second direction in a resistance assembly according to the present disclosure.
FIG. 12 is a view showing a circuitry of a battery pack according to the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a resistance unit, a resistance assembly, and a battery pack according to the present disclosure will be described with reference to the drawings.

### RESISTANCE UNIT (Embodiment 1)

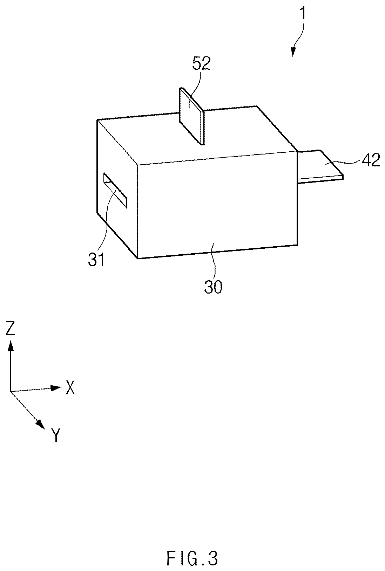

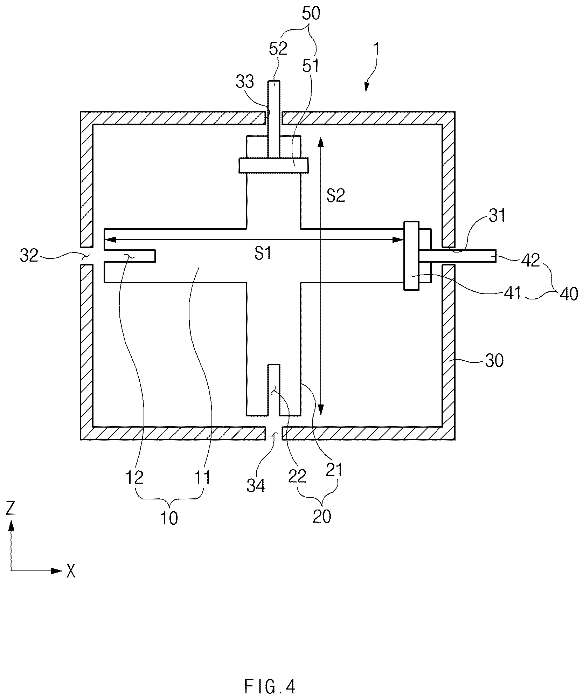

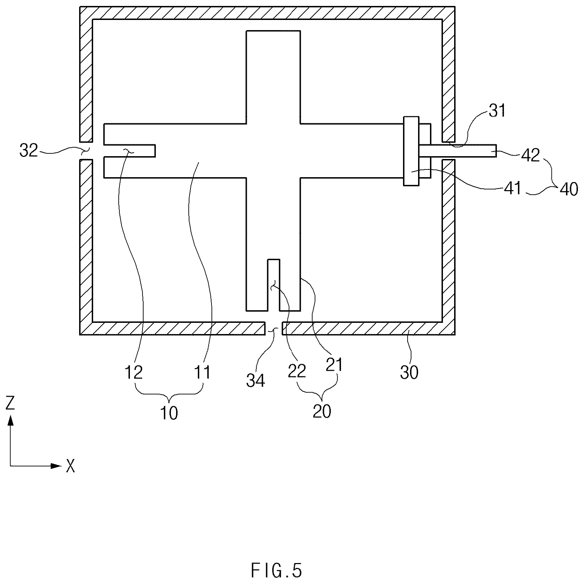

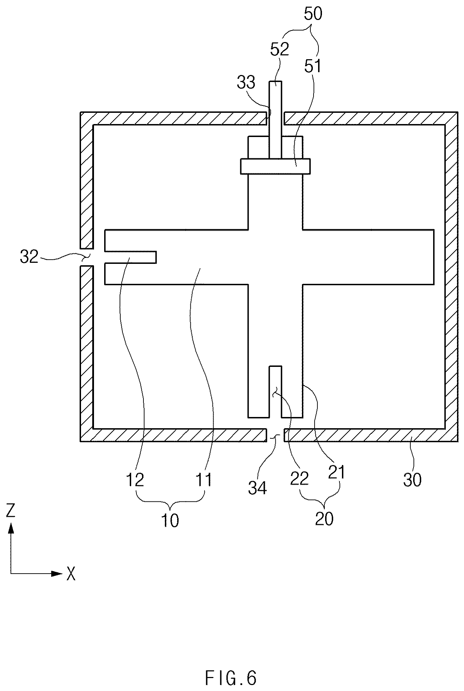

FIG. 3 is a perspective view showing a state in which terminal portions are formed in both a first direction and a second direction in a resistance unit according to Embodiment 1 of the present disclosure, and FIG. 4 is a cross-sectional view showing the internal structure of the resistance unit according to FIG. 3. FIG. 5 is a cross-sectional view showing a state in which a terminal portion is formed only in a first direction in a resistance unit according to Embodiment 1 of the present disclosure, and FIG. 6 is a cross-sectional view showing a state in which a terminal portion is formed only in a second direction in a resistance unit according to Embodiment 1 of the present disclosure.

Referring to FIGS. 3 to 6, a resistance unit 1 according to the present disclosure includes a first resistance portion 10 formed to extend in a first direction S1, a second resistance portion 20 formed to extend in a second direction S2, a case 30 accommodating the first resistance portion 10 and the second resistance portion 20, and terminal portions 40, 50 that are coupled to at least one of one end of the first resistance portion 10 and one end of the second resistance portion 20 and partially protrude to the outside of the case 30. Here, openings 32, 34 are formed in each of the portions of the case 30 facing the other end of the first resistance portion 10 and the other end of the second resistance portion 20. In this case, the resistance units 1 may be connected to and separated from each other in the first direction S1 and the second direction S2, so that the resistance units 1 may be assembled to fit the shape of the space in which the resistor is installed in the circuit, and may be connected in series and/or in parallel to fit the magnitude of the required resistance. That is, there is an advantageous effect of providing resistance of various specifications without limitation of the space in which the resistor is installed.

The resistance unit 1 may be a pre-charge resistor installed in the pre-charge circuit of the battery pack. When charging and discharging the battery pack, an in-rush current may be generated due to an instantaneous potential difference between the input terminal and the output terminal, and the pre-charge circuit provided with the resistance unit 1 increases the resistance of the entire circuit of the battery pack, thereby preventing the generation of the in-rush current and gradually reducing the potential difference between the input terminal and the output terminal.

Meanwhile, the resistance unit 1 may include a first resistance portion 10 extending in a first direction S1 and a second resistance portion 20 extending in a second direction S2 different from the first direction S1. In this case, both the first resistance portion 10 and the second resistance portion 20 are resistors connected to the pre-charge circuit and may have various structures. For example, each of the first resistance portion 10 and the second resistance portion 20 may include resistance bodies 11, 21 in a rod shape extending in a straight line. Here, the first resistance body 11 and the second resistance body 21 may be integrally connected. Additionally, each of the first resistance portion 10 and the second resistance portion 20 may have a structure in which a coil is wound around a conductor rod.

The case 30 is an exterior material that surrounds the first resistance portion 10 and the second resistance portion 20 and may have various structures. For example, the case 30 may have an empty hexahedral structure in which a space for accommodating the first resistance portion 10 and the second resistance portion 20 is formed therein. The case 30 may be made of an insulating material, and synthetic resins such as polyethylene (PE) and polypropylene (PP) may be used as the insulating material.

Meanwhile, openings 31, 32, 33, 34 may be formed in the case 30. Specifically, the case 30 may include at least some of the following openings: a first opening 31 formed in a part facing one end of the first resistance portion 10, a second opening 32 formed in a part facing the other end of the first resistance portion 10, a third opening 33 formed in a part facing one end of the second resistance portion 20, and a fourth opening 34 formed in a part facing the other end of the second resistance portion 20. In this case, the first to fourth openings 31, 32, 33, 34 may be formed large enough for a portion of terminal portions 40, 50 to be described later to pass therethrough.

The terminal portions 40, 50 are conductor terminals coupled to at least one of one end of the first resistance portion 10 and one end of the second resistance portion 20, and the resistance unit 1 may include terminal portions 40, 50 having various numbers and coupling structures. Specifically, the resistance unit 1 may include at least one of the first terminal portion 40 coupled to the first resistance portion 10 and the second terminal portion 50 coupled to the second resistance portion 20. In this case, the first terminal portion 40 and the second terminal portion 50 may have substantially the same shape, structure, and size.

The resistance unit 1 may include both the first terminal portion 40 coupled to one end of the first resistance portion 10 and the second terminal portion 50 coupled to one end of the second resistance portion 20, as shown in FIGS. 3 and 4. The first terminal portion 40 may protrude to the outside of the case 30 through the first opening 31, and the second terminal portion 50 may protrude to the outside of the case 30 through the third opening 32. Here, the second opening 32 and the fourth opening 34 may be formed in each of the portions of the case 30 facing the other end of the first resistance portion 10 and the other end of the second resistance portion 20. That is, the first to fourth openings 31, 32, 33, 34 may all be formed in the case 30.

Additionally, the resistance unit 1 may include only one first terminal portion 40 coupled to one end of the first resistance portion 10, as shown in FIG. 5. In this case, the first terminal portion 40 may protrude to the outside of the case 30 through the first opening 31. At this time, the second opening 32 and the fourth opening 34 may be formed in a portion of the case 30 facing the other end of the first resistance portion 10 and a portion of the case 30 facing the other end of the second resistance portion 20, respectively. That is, the first, second, and fourth openings 31, 32, 34 may be formed in the case 30.

On the other hand, the resistance unit 1 may include only one second terminal portion 50 coupled to one end of the second resistance portion 20, as shown in FIG. 6. The second terminal portion 50 may protrude to the outside of the case 30 through the third opening 33. The second opening 32 and the fourth opening 34 may be formed in a portion of the case 30 facing the other end of the first resistance portion 10 and a portion of the case 30 facing the other end of the second resistance portion 20, respectively. That is, the second, third, and fourth openings 32, 33, 34 may be formed in the case 30.

That is, in any case, the resistance unit 1 includes the first resistance portion 10, the second resistance portion 20, and the case 30, and at least one of the first and second resistance portions 10, 20 is coupled to terminal portions 40, 50 protruding to the outside of the case 30, and at least the second opening 32 and the fourth opening 34 are formed in the case 30, so that the resistance units 1 may be connected to and separated from each other in the first direction S1 and the second direction S2. Therefore, the resistance units 1 may be assembled to fit the shape of the space in which the resistor is installed in the circuit, and may be connected in series and/or in parallel to fit the magnitude of the required resistance, so that the user may provide resistance of various specifications without limitation of the space in which the resistor is installed by using the resistance units 1.

Meanwhile, the terminal portions 40, 50 may include terminal bodies 41, 51 coupled to at least one of one end of the first resistance portion 10 and one end of the second resistance portion 20, and terminal tips 42, 52 extending from the terminal bodies 41, 51 and partially protruding to the outside of the case 30. Specifically, the first terminal portion 40 may include a first terminal body 41 coupled to one end of the first resistance portion 10, and a first terminal tip 42 extending from the first terminal body 41 along the first direction S1 and protruding to the outside of the case 30. Likewise, the second terminal portion 50 may include a second terminal body 51 coupled to one end of the second resistance portion 20, and a second terminal tip 52 extending from the second terminal body 51 along the second direction S2 and protruding to the outside of the case 30.

Here, the first terminal body 41 and the second terminal body 51 may have substantially the same shape, structure, and size. Additionally, the first terminal tip 42 and the second terminal tip 52 may have substantially the same shape, structure, and size.

Meanwhile, the terminal bodies 41, 51 are coupled to one end of the first and second resistance portions 10, 20 inside the case 30, and the terminal tips 42, 52 may extend from the terminal bodies 41, 51. In this case, a portion of the terminal tips 42, 52 may be located inside the case 30, and the remainder of the terminal tips 42, 52 may protrude to the outside of the case 30.

At this time, the shape of the second opening 32 and the fourth opening 34 formed in the case 30 may correspond to the shape of the terminal tips 42, 52. In this case, the terminal tips 42, 52 provided in the resistance unit 1 are fitted into the second opening 32 or the fourth opening 34 of the neighboring resistance unit 1, and thus there is an advantageous effect of increasing the coupling force between the resistance units 1.

Meanwhile, the shape of the openings 31, 32, 33, 34 may correspond to the shape of the terminal tips 42, 52. For example, the shape of the first opening 31 may correspond to the shape of the first terminal tip 42 so that the tip of the first terminal portion 40 connected to the first resistance portion 10 may be fitted into the first opening 31. Additionally, the shape of the third opening 33 may correspond to the shape of the second terminal tip 42 so that the tip of the second terminal portion 50 connected to the second resistance portion 20 may be fitted into the third opening 33.

Meanwhile, terminal coupling grooves 12, 22 corresponding to the end shape of the terminal tips 42, 52 may be formed at the other ends of the first resistance portion 10 and the second resistance portion 20.

Specifically, a first terminal coupling groove 12 corresponding to the end shape of the terminal tips 42, 52 may be formed at the other end of the first resistance portion 10. In this case, the terminal tips 42, 52 of another resistance unit 1 inserted through the second opening 32 are fitted into the first terminal coupling groove 12, and thus there is an advantageous effect of increasing the coupling force between the resistance units 1.

Additionally, a second terminal coupling groove 22 corresponding to the end shape of the terminal tips 42, 52 may be formed at the other end of the second resistance portion 20. In this case, the terminal tips 42, 52 of another resistance unit 1 inserted through the fourth opening 34 are fitted into the second terminal coupling groove 22, and thus there is an advantageous effect of increasing the coupling force between the resistance units 1.

Meanwhile, the length of the first resistance portion 10 in the first direction S1 and the length of the second resistance portion 20 in the second direction S2 may be formed different from each other. For example, the length of the first resistance portion 10 in the first direction S1 may be formed longer than the length of the second resistance portion 20 in the second direction S2. The first direction S1 resistance formed in the resistance unit 1 has a larger value than the second direction S2 resistance, and thus there is an advantageous effect of easily forming an assembly having various shapes and resistance values when the resistance units 1 are combined.

Meanwhile, the case 30 may have an empty hexahedral shape. In this case, the neighboring resistance units 1 are adjacent to each other while the cases 30 are in contact with each other, and thus the resistance units 1 may be coupled to each other without forming an empty space therebetween. That is, there is an advantageous effect of improving space efficiency.

Additionally, the first direction S1 and the second direction S2 are different directions, and the angle between the first direction S1 and the second direction S2 may be formed in various ways. For example, the first direction S1 and the second direction S2 may be perpendicular to each other.

When the first direction S1 and the second direction S2 are perpendicular to each other and the case 30 has a hexahedral shape, a plurality of resistance units 1 may be stacked and coupled in the first direction S1 or the second direction S2, and thus there is an advantageous effect of minimizing wasted space when the resistance units 1 are combined.

### RESISTANCE UNIT (Embodiment 2)

The resistance unit according to Embodiment 2 of the present disclosure differs from Embodiment 1 in that the opening is formed only in a portion of the case facing one end of the second resistance portion. The contents common to Embodiment 1 will be omitted as much as possible, and Embodiment 2 will be described focusing on the differences. That is, it is obvious that the contents not described in Embodiment 2 may be considered as the contents of Embodiment 1 if necessary.

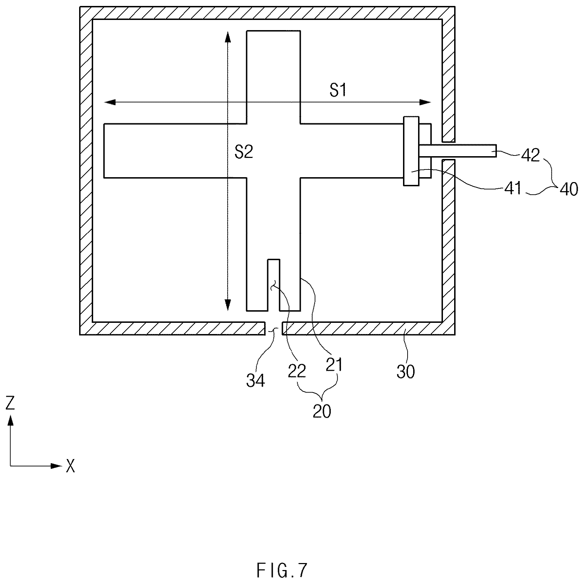

FIG. 7 is a cross-sectional view showing the internal structure of a resistance unit according to Embodiment 2 of the present disclosure.

Referring to FIG. 7, a resistance unit 1 according to Embodiment 2 of the present disclosure includes a first resistance portion 10 formed to extend in a first direction S1, a second resistance portion 20 formed to extend in a second direction S2, a case 30 accommodating the first resistance portion 10 and the second resistance portion 20, and a terminal portion 40 that is coupled to one end of the first resistance portion 10 and partially protrudes to the outside of the case 30, wherein an opening 34 may be formed in a portion of the case 30 facing one end of the second resistance portion 20. In this case, the resistance units 1 may be connected to and separated from each other in a vertical direction, so that the resistance units 1 may be assembled to fit the shape of the space in which the resistor is installed in the circuit.

Meanwhile, the terminal portion 40 may include a terminal body 41 coupled to one end of the first resistance portion 10 and a terminal tip 42 extending from the terminal body 41 and partially protruding to the outside of the case 30. The terminal body 41 may be coupled to one end of the first resistance portion 10 inside the case 30, and the terminal tip 42 may extend from the terminal body 41. In this case, a portion of the terminal tip 42 may be located inside the case 30, and the remainder of the terminal tip 42 may protrude to the outside of the case 30.

At this time, the shape of the opening 34 formed in the case 30 may correspond to the shape of the terminal tip 42. In this case, the terminal tip 42 provided in the resistance unit 1 is fitted into the opening 34 of the neighboring resistance unit 1, and thus there is an advantageous effect of increasing the coupling force between the resistance units 1.

Meanwhile, a terminal coupling groove 22 corresponding to the end shape of the terminal tip 42 may be formed at one end of the second resistance portion 20. In this case, the terminal tip 42 of another resistance unit 1 inserted through the opening 34 is fitted into the terminal coupling groove 22, and thus there is an advantageous effect of increasing the coupling force between the resistance units 1.

Additionally, the length of the first resistance portion 10 in the first direction S1 and the length of the second resistance portion 20 in the second direction S2 may be formed different from each other. For example, the length of the first resistance portion 10 in the first direction S1 may be formed longer than the length of the second resistance portion 20 in the second direction S2, or the length of the first resistance portion 10 in the first direction S1 may be formed shorter than the length of the second resistance portion 20 in the second direction S2.

Meanwhile, the case 30 may have an empty hexahedral shape. In this case, the neighboring resistance units 1 are adjacent to each other while the cases 30 are in contact with each other, and thus the resistance units 1 may be coupled to each other without forming an empty space therebetween. That is, there is an advantageous effect of improving space efficiency.

Additionally, the first direction S1 and the second direction S2 are different directions, and the angle between the first direction S1 and the second direction S2 may be formed in various ways. For example, the first direction S1 and the second direction S2 may be perpendicular to each other.

When the first direction S1 and the second direction S2 are perpendicular to each other and the case 30 has a hexahedral shape, a plurality of resistance units 1 may be stacked and coupled in the first direction S1 or the second direction S2, and thus there is an advantageous effect of minimizing wasted space when the resistance units 1 are combined.

### RESISTANCE UNIT (Embodiment 3)

The resistance unit according to Embodiment 3 of the present disclosure differs from Embodiments 1 and 2 in that the terminal tips are formed at both ends of the first resistance portion. The contents common to Embodiments 1 and 2 will be omitted as much as possible, and Embodiment 3 will be described focusing on the differences. That is, it is obvious that the contents not described in Embodiment 3 may be considered as the contents of Embodiments 1 and 2 if necessary.

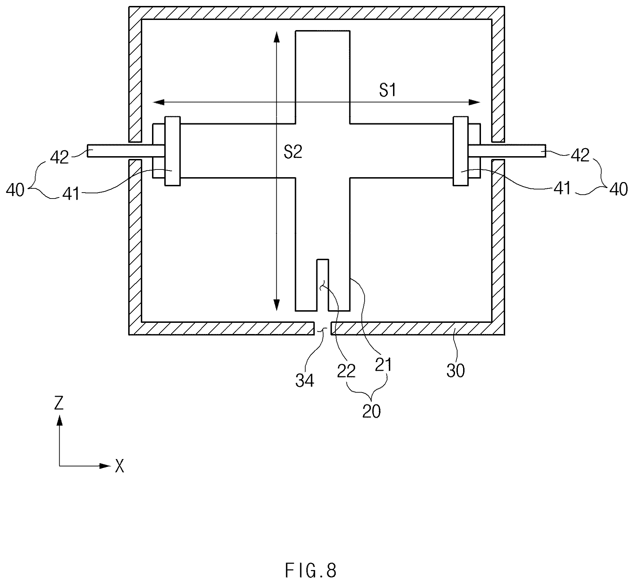

FIG. 8 is a cross-sectional view showing a state in which a groove is formed only at one end of a second resistance portion in a resistance unit according to Embodiment 3 of the present disclosure.

Referring to FIG. 8, a resistance unit 1 according to Embodiment 3 of the present disclosure includes a first resistance portion 10 formed to extend in a first direction S1, a second resistance portion 20 formed to extend in a second direction S2, a case 30 accommodating the first resistance portion 10 and the second resistance portion 20, and a terminal portion 40 that is coupled to both ends of the first resistance portion 10 and partially protrudes to the outside of the case 30.

Here, an opening 34 may be formed in a portion of the case 30 facing one end of the second resistance portion 20. These resistance units 1 may be connected to and separated from each other in a horizontal or vertical direction, so that the resistance units 1 may be assembled to fit the shape of the space in which the resistor is installed in the circuit.

The terminal portion 40 may include a terminal body 41 coupled to both ends of the first resistance portion 10 and a terminal tip 42 extending from the terminal body 41 and partially protruding to the outside of the case 30. The terminal body 41 may be coupled to one end of the first resistance portion 10 inside the case 30, and the terminal tip 42 may extend from the terminal body 41. In this case, a portion of the terminal tip 42 may be located inside the case 30, and the remainder of the terminal tip 42 may protrude to the outside of the case 30.

Additionally, the shape of the opening 34 formed in the case 30 may correspond to the shape of the terminal tip 42. In this case, the terminal tip 42 provided in the resistance unit 1 is fitted into the opening 34 of the neighboring resistance unit 1, and thus there is an advantageous effect of increasing the coupling force between the resistance units 1.

Meanwhile, a terminal coupling groove 22 corresponding to the end shape of the terminal tip 42 may be formed at one end of the second resistance portion 20. In this case, the terminal tip 42 of another resistance unit 1 inserted through the opening 34 is fitted into the terminal coupling groove 22, and thus there is an advantageous effect of increasing the coupling force between the resistance units 1.

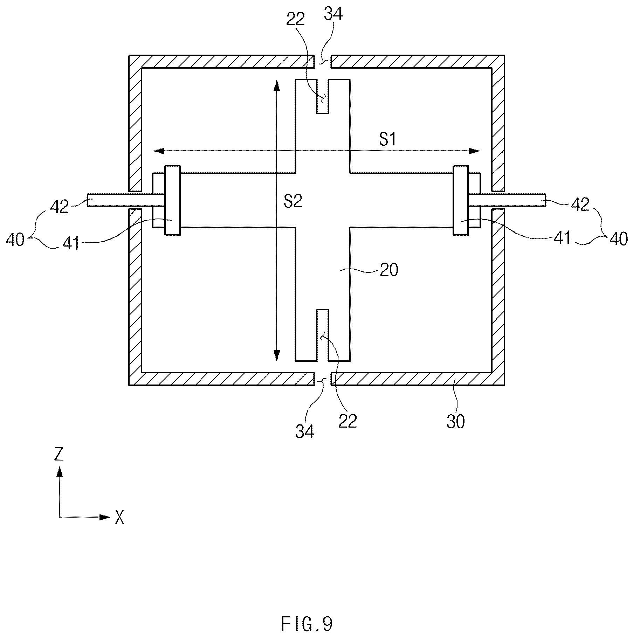

FIG. 9 is a cross-sectional view showing a state in which grooves are formed at both ends of a second resistance portion in a resistance unit according to Embodiment 3 of the present disclosure.

Referring to FIG. 9, the openings 45 may be formed in each of the portions of the case 30 facing both ends of the second resistance portion 20. Additionally, terminal coupling grooves 22 corresponding to the end shape may be formed at both ends of the second resistance portion 20. Meanwhile, the first direction S1 and the second direction S2 are different directions, and the angle between the first direction S1 and the second direction S2 may be formed in various ways. For example, the first direction S1 and the second direction S2 may be perpendicular to each other.

When the first direction S1 and the second direction S2 are perpendicular to each other and the case 30 has a hexahedral shape, a plurality of resistance units 1 may be stacked and coupled in the first direction S1 or the second direction S2, and thus there is an advantageous effect of minimizing wasted space when the resistance units 1 are combined.

### RESISTANCE ASSEMBLY

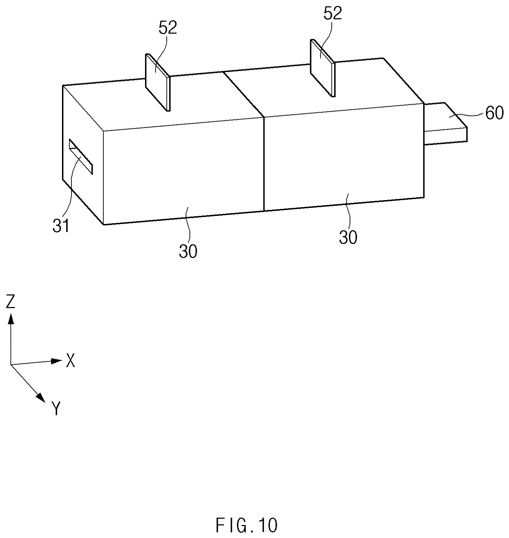

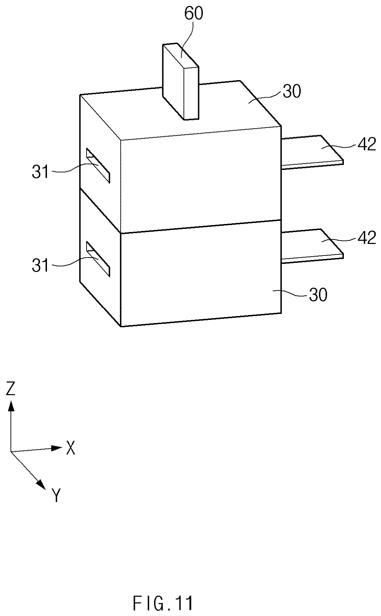

FIG. 10 is a perspective view showing a state in which resistance units are connected in a first direction in a resistance assembly according to the present disclosure, and FIG. 11 is a perspective view showing a state in which resistance units are connected in a second direction in a resistance assembly according to the present disclosure.

Referring to FIGS. 10 and 11, a plurality of resistance units 1 may be coupled in a resistance assembly according to the present disclosure. Specifically, a plurality of resistance units 1 are coupled along at least one of the first direction S1 and the second direction S2. For example, the resistance units 1 may be coupled in a row along the first direction S1, as shown in FIG. 8. Here, the horizontal terminal tip 42 formed in the resistance unit 1 may be inserted into the horizontal openings 31, 32 formed in the case 30 of the neighboring resistance unit 1.

Additionally, the resistance units 1 may be coupled in a row along the second direction S2, as shown in FIG. 9. Here, the vertical terminal tip 52 formed in the resistance unit 1 may be inserted into the vertical openings 33, 34 formed in the case 30 of the neighboring resistance unit 1.

Additionally, although not shown in FIGS. 8 and 9, the resistance assembly may include a plurality of resistance units 1 coupled for each of the first direction S1 and the second direction S2.

That is, the user may configure the resistance assembly by coupling the resistance units 1 in various ways for each of the first direction S1 and the second direction S2, and may implement various series/parallel connections of the resistors as they are installed in the circuit.

Meanwhile, the resistance assembly may include an insulating cover 60 that surrounds a portion of the terminal portions 40, 50 protruding to the outside of the case 30. As described above, the terminal portions 40, 50 include terminal bodies 41, 51 and terminal tips 42, 52, and only a portion of the terminal tips 42, 52 may protrude to the outside of the case 30. That is, the insulating cover 60 may be formed to surround only a portion of the terminal tips 42, 52 that protrudes to the outside of the case 30.

Various materials having low conductivity may be used for the insulating cover 60. For example, synthetic resins such as polyethylene (PE), polypropylene (PP), polyurethane (PU), and the like may be used for the insulating cover 60.

Meanwhile, the resistance assembly may include a plurality of terminal tips 42, 52 that protrude to the outside of the case 30 depending on the coupling form of the resistance unit 1. In this case, the insulating cover 60 may be installed only in some of the plurality of protruding terminal tips 42, 52.

### BATTERY PACK

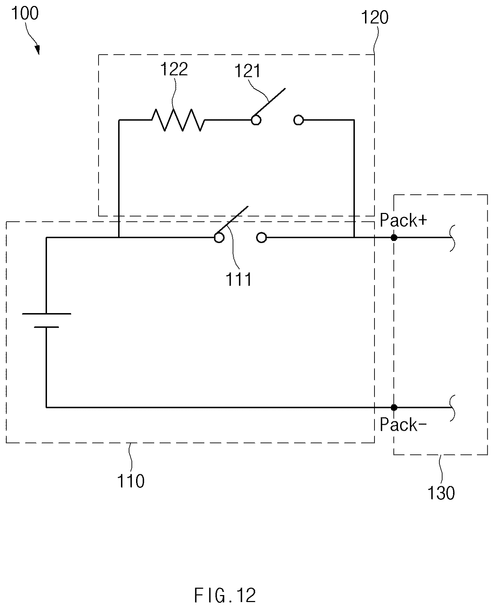

FIG. 12 is a view showing a circuitry of a battery pack according to the present disclosure.

A battery pack according to the present disclosure includes a plurality of battery modules, a main circuitry 110 configuring a charging and discharging path of the plurality of battery modules, a pre-charge circuitry 120 connected to the main circuitry 110, and a resistance assembly installed in the pre-charge circuitry 120. In this case, the resistance assembly in which a plurality of resistance units 1 are coupled in at least one of the first direction S1 and the second direction S2 is installed in the pre-charge circuitry 120 of the battery pack, and thus there is an advantageous effect of providing pre-charge resistors of various sizes without being limited by the resistor installation space of the pre-charge circuitry 120.

The battery pack has a pack circuitry 100 installed therein, through which charging and discharging, voltage balancing, and status monitoring of battery modules in the battery pack may be performed. This pack circuitry 100 may include a main circuitry 110 that performs the charging and discharging of battery modules. A main relay 111 is installed in the main circuitry 110, and when the main relay 111 is key-on, charging of the battery modules may be initiated. In this case, an instantaneous potential difference may be formed between the input terminal and the output terminal, and thus the pre-charge circuitry 120 for preventing this may be connected to the main circuitry 110.

Here, the pre-charge circuitry 120 is connected in parallel to the main circuitry 110, and the pre-charge circuitry 120 may include a pre-charge relay 121 and a pre-charge resistor 122. Here, the pre-charge resistor 122 may be a resistance unit 1 or a resistance assembly described above. The pre-charge relay 121 and the main relay 111 may be switched while crossing each other to prevent an instantaneous potential difference from being formed between the input terminal and the output terminal. Additionally, the current flows through the pre-charge circuitry 120 in which the pre-charge resistor 122 is formed, and thus an in-rush current may be prevented from being generated in the pack circuitry 100.

Meanwhile, the current may be supplied to the battery modules through the internal circuitry 130 formed in the battery pack via the main circuitry 110 and the pre-charge circuitry 120, so that the charging process of the battery pack may proceed.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 1: | Resistance unit | 2: | Metal rod portion |
| 3: | Metal terminal portion | 4: | Exterior material |
| 10, 20: | Resistance portion | 11, 21: | Resistance body |
| 12, 22: | Terminal coupling groove | 30: | Case |
| 31, 32, 33, 34: | Opening | 40, 50: | Terminal portion |
| 41, 51: | Terminal body | 42, 52: | Terminal tip |
| 60: | Insulating cover | 100: | Pack circuitry |
| 110: | Main circuitry | 111: | Main relay |
| 120: | Pre-charge circuitry | 121: | Pre-charge relay |
| 122: | Pre-charge resistor | 130: | Internal circuitry |
| S1: | First direction | S2: | Second direction |

## Claims

1. A resistance unit comprising:
a first resistance portion formed to extend in a first direction;
a second resistance portion formed to extend in a second direction;
a case accommodating the first resistance portion and the second resistance portion; and
a terminal portion that is coupled to at least one of one end of the first resistance portion and one end of the second resistance portion and partially protrudes to the outside of the case,
wherein an opening is formed in each of the portions of the case facing the other end of the first resistance portion and the other end of the second resistance portion.

2. The resistance unit according to claim 1,
wherein the terminal portion comprises:
a terminal body coupled to at least one of one end of the first resistance portion and one end of the second resistance portion; and
a terminal tip extending from the terminal body and partially protruding to the outside of the case.

3. The resistance unit according to claim 2,
wherein the shape of the opening corresponds to the shape of the terminal tip.

4. The resistance unit according to claim 3,
wherein a terminal coupling groove corresponding to the end shape of the terminal tip is formed at each of the other end of the first resistance portion and the other end of the second resistance portion.

5. The resistance unit according to claim 1,
wherein the length of the first resistance portion in the first direction is longer than the length of the second resistance portion in the second direction.

6. The resistance unit according to claim 1,
wherein the case has an empty hexahedral shape.

7. The resistance unit according to claim 1,
wherein the first direction and the second direction are perpendicular to each other.

8. A resistance unit comprising:
a first resistance portion formed to extend in a first direction;
a second resistance portion formed to extend in a second direction;
a case accommodating the first resistance portion and the second resistance portion; and
a terminal portion that is coupled to one end of the first resistance portion and partially protrudes to the outside of the case,
wherein an opening is formed in the portion of the case facing one end of the second resistance portion.

9. The resistance unit according to claim 8,
wherein the terminal portion comprises:
a terminal body coupled to one end of the first resistance portion; and
a terminal tip extending from the terminal body and partially protruding to the outside of the case.

10. The resistance unit according to claim 9,
wherein the shape of the opening corresponds to the shape of the terminal tip.

11. The resistance unit according to claim 10,
wherein a terminal coupling groove corresponding to the end shape of the terminal tip is formed at one end of the second resistance portion.

12. A resistance unit comprising:
a first resistance portion formed to extend in a first direction;
a second resistance portion formed to extend in a second direction;
a case accommodating the first resistance portion and the second resistance portion; and
a terminal portion that is coupled to both ends of the first resistance portion and partially protrudes to the outside of the case,
wherein an opening is formed in at least one of the portions of the case facing both ends of the second resistance portion.

13. The resistance unit according to claim 12,
wherein the terminal portion comprises:
a terminal body coupled to each of both ends of the first resistance portion; and
a terminal tip extending from the terminal body and partially protruding to the outside of the case.

14. The resistance unit according to claim 13,
wherein the shape of the opening corresponds to the shape of the terminal tip.

15. The resistance unit according to claim 14,
wherein a terminal coupling groove corresponding to the end shape of the terminal tip is formed at one or more of one end and the other end of the second resistance portion.

16. A resistance assembly in which a plurality of resistance units according to any one of claims of 1 to 15 are coupled.

17. The resistance assembly according to claim 16, comprising:
an insulating cover that surrounds a portion of the terminal portion protruding to the outside of the case.

18. A battery pack comprising:
a plurality of battery modules;
a main circuitry configuring a charging and discharging path of the plurality of battery modules;
a pre-charge circuitry connected to the main circuitry; and
a resistance assembly according to claim 16 installed in the pre-charge circuitry.
